# EUROPEAN PATENT APPLICATION

(11) **EP 4 848 438 A1**
(43) Date of publication of application: **02.12.2026**
(21) Application number: 26743370.4
(22) Date of filing: 08.01.2026
(51) Int. Cl.: H01M 50/244, H01M 50/256, H01M 50/204

(54) **BATTERY CELL ASSEMBLY AND BATTERY PACK COMPRISING SAME**

(30) Priority: 17.01.2025 KR 20250007247
(71) Applicant: LG Energy Solution, Ltd., Seoul 07335 (KR)
(72) Inventor: HWANG, In Ho, Daejeon 34122 (KR); HUR, Nam Hoon, Daejeon 34122 (KR); SHIN, Ju Hwan, Daejeon 34122 (KR); PARK, Seung Chul, Daejeon 34122 (KR); LEE, Jung Woo, Daejeon 34122 (KR); LEE, Jae Chul, Daejeon 34122 (KR)
(74) Representative: Plasseraud IP
(86) International application number: PCT/KR2026/000441
(87) International publication number: WO 2026/155490

(57) **Abstract**

According to exemplary embodiments, a battery cell assembly is provided. The battery cell assembly may include a plurality of battery cells arranged in a first direction; and first and second side beams spaced apart from each other in the first direction with the plurality of battery cells therebetween. Each of the first and second side beams may include first and second vertical ribs perpendicular to the first direction; and first and second horizontal ribs connecting the first and second vertical ribs. The first vertical rib may be closer to the battery cells than the second vertical rib. The first horizontal rib may be above the second horizontal rib. Each of the first and second side beams may include pin holes in each of the first and second horizontal ribs. Each of the pin holes may have a width in the first direction and a width in a second direction perpendicular to the first direction. The width in the second direction may be greater than the width in the first direction.

## Description

### [Technical Field]

The present disclosure relates to a battery cell assembly and a battery pack comprising the same. This application claims the benefit of priority from Korean Patent Application No. 10-2025-0007247, filed on January 17, 2025, the entire contents disclosed therein are incorporated by reference into this disclosure.

### [Background]

Unlike primary batteries, secondary batteries can be charged and discharged multiple times. Secondary batteries are widely used as energy sources for various wireless devices such as handsets, laptops, wireless vacuum cleaners, etc. Recently, due to energy density improvements and economies of scale, the manufacturing cost per unit capacity of secondary batteries has dramatically decreased, and as the cruising distance of BEVs (battery electric vehicles) has increased to a level equivalent to fuel vehicles, the primary applications of secondary batteries are expanding from mobile devices to mobility.

The trend in technological development of secondary batteries is the improvement of energy density and safety. Here, the energy density of a secondary battery is a value obtained by dividing the maximum electrical energy that the secondary battery can store by the mass of the secondary battery. The high energy density of a secondary battery is directly connected to the driving efficiency and cruising distance of mobility, and various studies are being conducted to improve the energy density of secondary batteries.

### [Summary]

### [Technical Problem]

The technical problem to be solved by the present disclosure is to provide a battery pack with improved rigidity while the efficiency of the loading process of the battery cell assembly is improved.

### [Technical Solution]

According to exemplary embodiments for solving the above-described problem, a battery cell assembly is provided. The battery cell assembly may include a plurality of battery cells arranged in a first direction; and first and second side beams spaced apart from each other in the first direction with the plurality of battery cells therebetween. Each of the first and second side beams may include first and second vertical ribs perpendicular to the first direction; and first and second horizontal ribs connecting the first and second vertical ribs. The first vertical rib may be closer to the battery cells than the second vertical rib. The first horizontal rib may be above the second horizontal rib. Each of the first and second side beams may include pin holes in each of the first and second horizontal ribs. Each of the pin holes may have a width in the first direction and a width in a second direction perpendicular to the first direction. The width in the second direction may be greater than the width in the first direction.

The planar shape of each of the pin holes may be rectangular or rectangular with rounded vertices.

The pin holes of the first horizontal rib may be aligned in a vertical direction with corresponding ones of the pin holes of the second horizontal rib.

Each of the first and second side beams may include first bolting holes in the first horizontal rib and the second vertical rib; and second bolting holes in the second horizontal rib and overlapping with corresponding ones of the first bolting holes in the vertical direction.

The shape of each of the pin holes may be different from the shape of each of the second bolting holes.

The width in the second direction of each of the pin holes may be greater than a width in the second direction of each of the second bolting holes.

The shape of each of the second bolting holes may be circular.

Each of the pin holes of the first horizontal rib may be between neighboring ones of the first bolting holes. Each of the pin holes of the second horizontal rib may be between neighboring ones of the second bolting holes.

Each of the first and second side beams may further include first guide holes in the first horizontal rib; and second guide holes in the second horizontal rib and the second vertical rib and overlapping with corresponding ones of the first guide holes in the vertical direction.

The shape of each of the pin holes may be different from the shape of each of the first guide holes.

The width in the second direction of each of the pin holes may be greater than a width in the second direction of each of the first guide holes.

Each of the second guide holes may be spaced apart from the first horizontal rib.

Each of the first guide holes may be circular.

According to exemplary embodiments for solving the above-described problem, a battery cell assembly is provided. The battery cell assembly may include a plurality of battery cells arranged in a first direction; and first and second side beams spaced apart from each other in the first direction with the plurality of battery cells therebetween. Each of the first and second side beams may include first and second vertical ribs perpendicular to the first direction; and first and second horizontal ribs connecting the first and second vertical ribs. The first vertical rib may be closer to the battery cells than the second vertical rib. The first horizontal rib may be above the second horizontal rib. Each of the first and second side beams may include first guide holes in the first horizontal rib; and second guide holes in the second horizontal rib and the second vertical rib and overlapping with corresponding ones of the first guide holes in the vertical direction.

According to exemplary embodiments for solving the above-described problem, a battery pack is provided. The battery pack may include a base plate; and a battery cell assembly on the base plate; first and second cross beams spaced apart from each other in the first direction with the battery cell assembly therebetween and each extending in a second direction perpendicular to the first direction; and guide pins coupled to each of the first and second cross beams and inserted into each of the second guide holes of the first and second side beams. Each of the guide pins may not overlap with the second vertical rib in the first direction by each of the second guide holes.

### [Advantageous Effects]

According to exemplary embodiments of the present disclosure, the shapes of the pin holes and guide holes of the side beams of the battery cell assembly can be controlled. Accordingly, when loading the battery cell assembly, a gripping area of the battery cell assembly by gripper pins of a loading device can be increased to apply a greater compressive force to the battery cell assemblies. In addition, the battery cell assembly can be seated in a pack housing such that facing surfaces of the side beam and the cross beam of the battery cell assembly are joined. As a result, deformation of the side beams and guide pins during swelling of the battery cells can be prevented or minimized, and the rigidity of the battery pack can be improved.

The effects that can be obtained in exemplary embodiments of the present disclosure are not limited to the above-described effects, and other effects not mentioned can be derived and understood by a person skilled in the art from the following description. In other words, unintended effects of implementing the exemplary embodiments of the present disclosure may also be derived from the exemplary embodiments of the present disclosure by a person skilled in the art.

### [Brief Description of the Drawings]

FIG. 1 is a top view of a battery pack according to exemplary embodiments.
FIG. 2 is a perspective view of a battery cell assembly according to exemplary embodiments.
FIG. 3 is a partially enlarged view of a battery cell assembly according to exemplary embodiments.
FIG. 4 is a cross-sectional view of a battery cell assembly according to exemplary embodiments.
FIG. 5 is a top view of a side beam according to exemplary embodiments.
FIG. 6 is a bottom view of a side beam according to exemplary embodiments.
FIG. 7 is a cross-sectional view of a battery pack according to exemplary embodiments.
FIG. 8 is a partial perspective view of a battery cell assembly according to exemplary embodiments.
FIG. 9 is a cross-sectional view of a battery pack according to exemplary embodiments.
FIG. 10 is a cross-sectional view of a battery pack according to exemplary embodiments.
FIG. 11 is a cross-sectional view showing a manufacturing process of a battery pack according to exemplary embodiments.
FIG. 12 is a cross-sectional view showing a manufacturing process of a battery pack according to exemplary embodiments.
FIG. 13 is a cross-sectional view showing a manufacturing process of a battery pack according to exemplary embodiments.
FIG. 14 is a cross-sectional view showing a manufacturing process of a battery pack according to exemplary embodiments.

### [Detailed Description]

Hereinafter, preferred embodiments of the present disclosure will be described in detail with reference to the accompanying drawings. Prior to this, the terms or words used in the present specification and claims should not be construed as being limited to conventional or dictionary meanings, and should be interpreted as meanings and concepts that conform to the technical idea of the present disclosure based on the principle that the inventors can appropriately define the concept of terms in order to describe their own invention in the best way.

Therefore, it should be understood that the embodiments described in the present specification and the configurations shown in the drawings are merely one most preferred embodiment of the present disclosure and do not represent all of the technical ideas of the present disclosure, so that various equivalents and modifications that may replace them may exist at the time of filling the present application.

In addition, in describing the present disclosure, when it is determined that a detailed description of a related known configuration or function may obscure the gist of the present disclosure, the detailed description thereof will be omitted.

The embodiments of the present disclosure are provided to more completely describe the present disclosure to those skilled in the art, so the shapes and sizes of components in the drawings may be exaggerated, omitted, or schematically illustrated for clearer explanation. Therefore, the size or ratio of each component does not entirely reflect the actual size or ratio.

### (First and Second Embodiments)

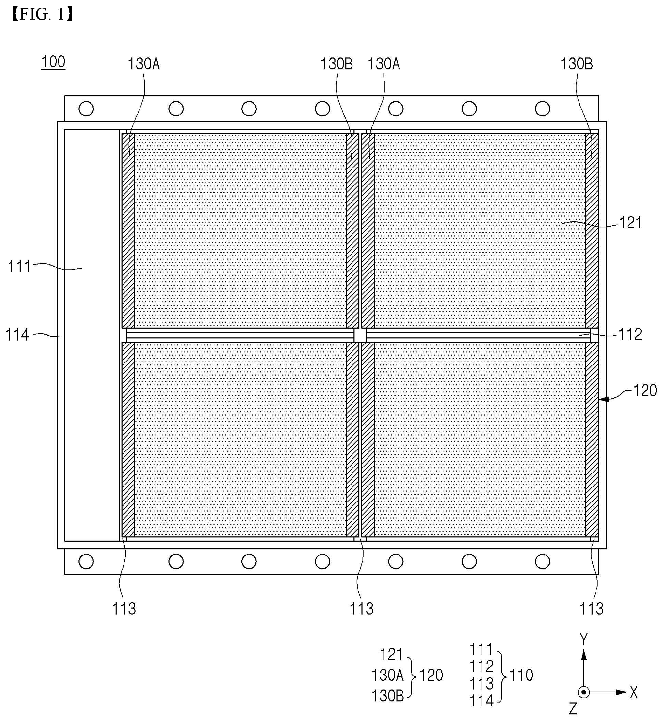

FIG. 1 is a top view showing a battery pack 100 according to exemplary embodiments.

Referring to FIG. 1, the battery pack 100 may include a pack housing 110 and battery cell assemblies 120.

The pack housing 110 may include a base plate 111, a center beam 112, cross beams 113, and side walls 114.

The base plate 111 may have a flat plate shape. Two directions substantially parallel to a mounting surface of the base plate 111 are defined as an X direction and a Y direction, and a direction substantially perpendicular to the mounting surface of the base plate 111 is defined as a Z direction. The X direction, the Y direction, and the Z direction may be substantially perpendicular to each other.

The center beam 112 and the cross beams 113 may partition a space defined by the pack housing 110. The center beam 112 and the cross beams 113 may partition spaces in which the battery cell assemblies 120 are mounted. The center beam 112 and the cross beams 113 may be surrounded by the side walls 114.

In the present example, the center beam 112 and the cross beams 113 partition the accommodation space of the pack housing 110 into a 2-row by 2-column matrix, but this is for illustrative purposes and does not limit the technical idea of the present disclosure in any way.

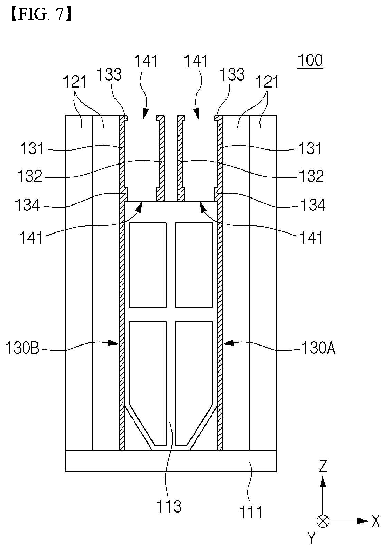

The center beam 112 may extend in the X direction. The center beam 112 may be formed together with the base plate 111 by an extrusion process, or may be welded to the base plate 111. Each of the cross beams 113 may intersect the center beam 112. Each of the cross beams 113 may extend in the Y direction. The cross beams 113 may be spaced apart from each other in the X direction. As shown in FIG. 7, FIG. 9, and FIG. 10, each of the cross beams 113 may have a hollow structure.

The side walls 114 may be substantially perpendicular to the base plate 111. The side walls 114 may be adjacent to edge portions of the base plate 111. The side walls 114 may be coupled to the edge portions of the base plate 111.

The battery cell assemblies 120 may be mounted in the pack housing 110. The center beam 112 may partition the battery cell assemblies 120 in the Y direction. The cross beams 113 may partition the plurality of battery cell assemblies 120 in the X direction. The side walls 114 may horizontally surround the plurality of battery cell assemblies 120.

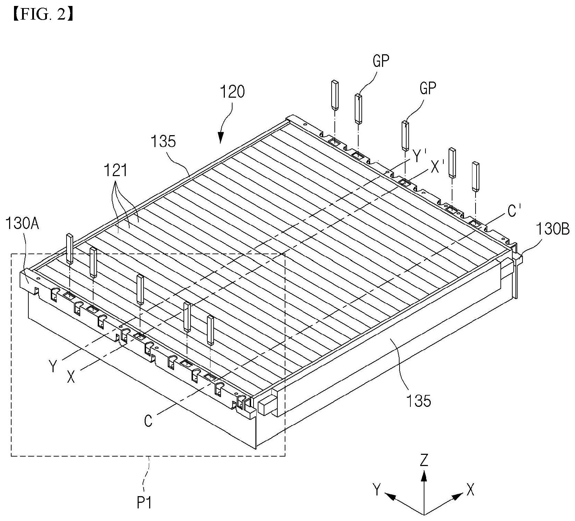

Each of the battery cell assemblies 120 may include a plurality of battery cells 121 and side beams 130A and 130B. The structure of the battery cell assemblies 120 will be described in detail with reference to FIG. 2 to FIG. 10.

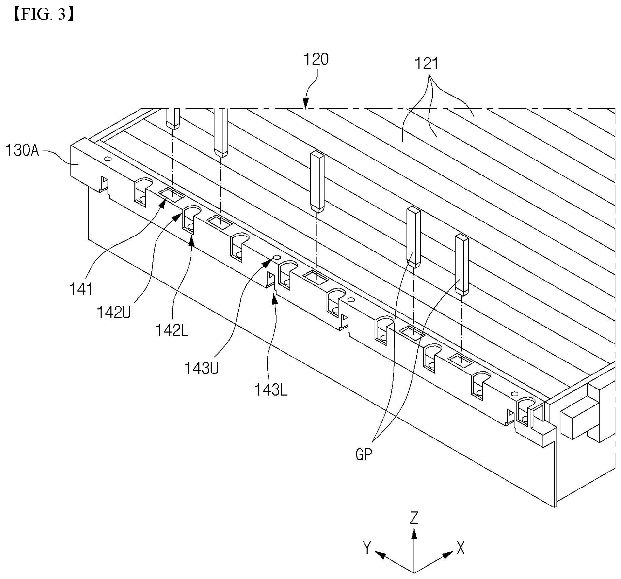

FIG. 2 is a perspective view showing a battery cell assembly 120 according to exemplary embodiments. FIG. 3 is a perspective view showing a portion of the battery cell assembly 120 according to exemplary embodiments. FIG. 3 shows an enlarged view of P1 in FIG. 2.

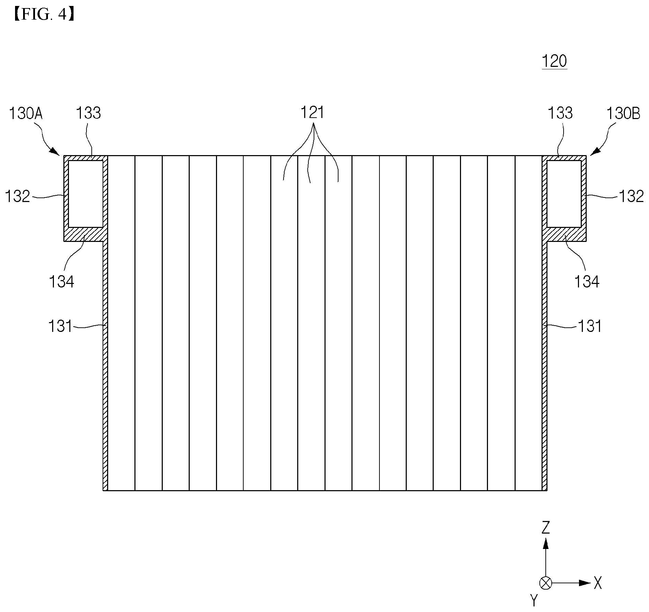

FIG. 4 is a cross-sectional view showing the battery cell assembly 120 according to exemplary embodiments. FIG. 4 shows a cross-section taken along C-C' of FIG. 2.

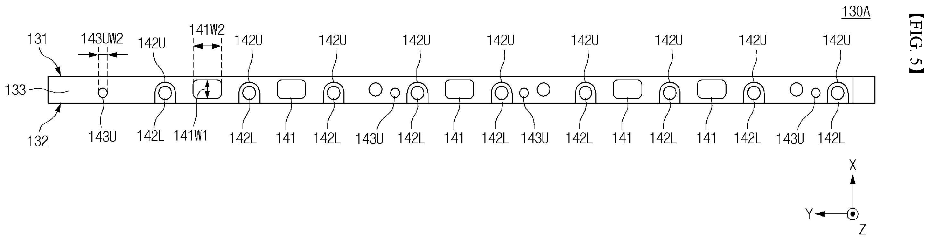

FIG. 5 is a top view showing a side beam 130A according to exemplary embodiments.

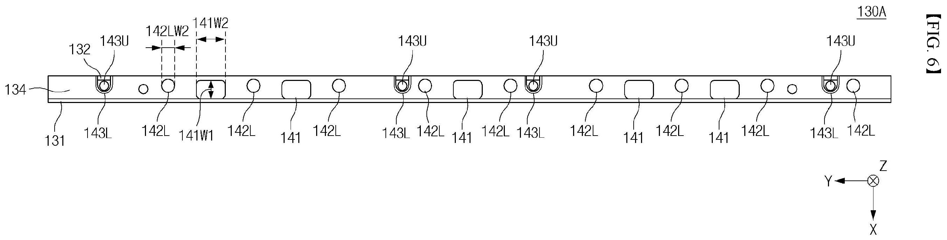

FIG. 6 is a bottom view showing a side beam 130B according to exemplary embodiments.

FIG. 7 is a cross-sectional view showing pin holes 141 of the battery pack 100 according to exemplary embodiments.

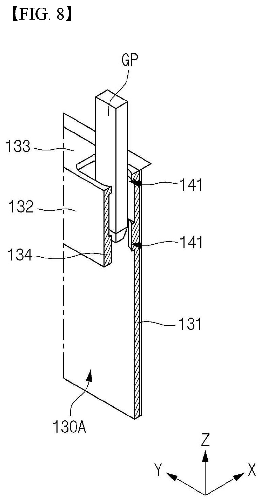

FIG. 8 is a perspective view showing an embodiment in which a gripper pin GP is coupled to the pin holes 141 of the side beam 130A according to exemplary embodiments.

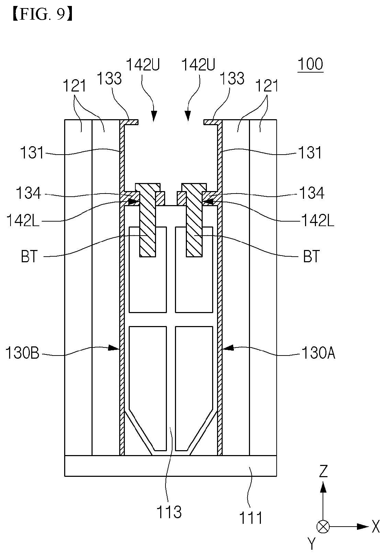

FIG. 9 is a cross-sectional view showing bolting holes 142U and 142L of the battery pack 100 according to exemplary embodiments.

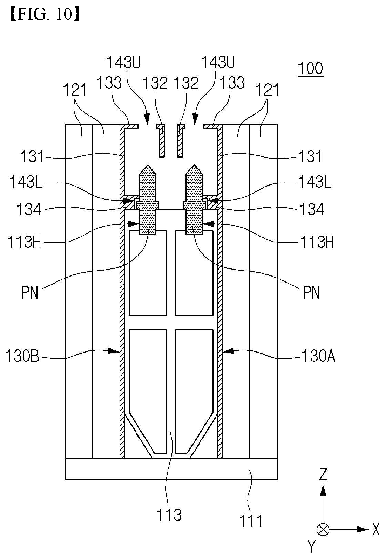

FIG. 10 is a cross-sectional view showing guide holes 143U and 143L of the battery pack 100 according to exemplary embodiments.

The battery cell assembly 120 may include a plurality of battery cells 121, side beams 130A and 130B, and integrated circuit assemblies 135. The battery cell assembly 120 may not include a module frame. That is, the battery pack 100 may be a moduleless type. However, this is a non-limiting example and does not limit the technical idea of the present disclosure in any way. A person having ordinary skill in the art will be able to easily arrive at a plurality of battery cell assemblies including a module frame and a module-type battery pack including the same based on what is described herein.

The plurality of battery cells 121 may be arranged in the X direction. Each of the plurality of battery cells 121 may include an electrode assembly, an electrolyte, and a case. Each of the plurality of battery cells 121 may be any one of a cylindrical battery cell, a prismatic battery cell, and a pouch-type battery cell. The electrode assembly of the cylindrical battery cell may be embedded in a cylindrical metal can. The electrode assembly of the prismatic battery cell may be embedded in a prismatic metal can. The electrode assembly of the pouch-type battery cell may be embedded in a pouch case including an aluminum laminate sheet.

The electrode assembly may include a positive electrode, a negative electrode, and a separator interposed between the positive electrode and the negative electrode. A jelly roll type electrode assembly may have a structure in which a positive electrode, a negative electrode, and a separator interposed therebetween are wound. A stack type electrode assembly may include a plurality of positive electrodes, a plurality of negative electrodes, and a plurality of separators interposed therebetween that are sequentially stacked.

According to exemplary embodiments, the plurality of battery cells 121 may form a plurality of banks. Each of the plurality of banks may include one or more battery cells 121 connected in parallel. The plurality of banks may be connected in series with each other. The number of battery cells 121 included in each of the plurality of banks and the number of banks connected in series with each other may be determined according to voltage and current to be output through each of the plurality of battery cell assemblies 120.

Each of the battery cell assemblies 120 may further include a plurality of separators. The plurality of separators may be interposed between the plurality of battery cells 121. The plurality of separators may include an elastic material and may absorb swelling of the plurality of battery cells. According to exemplary embodiments, the plurality of separators may be a thermal barrier. According to exemplary embodiments, each of the plurality of separators may have a high melting temperature and a low thermal conductivity. According to exemplary embodiments, each of the plurality of separators may include a flame retardant material such as ceramic and coated glass material. According to exemplary embodiments, the plurality of separators may be configured to release a fire retarding material and a fire extinguishing agent when a thermal runaway event occurs. The battery cells 121 and the separators may form a cell stack.

The side beams 130A and 130B may be spaced apart from each other in the X direction with the plurality of battery cells 121 therebetween. The side beams 130A and 130B may support the cell stack in the X direction. The side beams 130A and 130B may include aluminum. The side beams 130A and 130B may be provided by an extrusion process. The side beams 130A and 130B may be arranged symmetrically with respect to the cell stack. Each of the side beams 130A and 130B may have an approximately Greek letter 'Γ' shape. Each of the side beams 130A and 130B may be coupled to an adjacent one of the cross beams 113.

Referring to FIG. 4, each of the side beams 130A and 130B may have a hollow structure. Each of the side beams 130A and 130B may include vertical ribs 131 and 132 and horizontal ribs 133 and 134.

The vertical ribs 131 and 132 may be spaced apart from each other in the X direction. Each of the vertical ribs 131 and 132 may be substantially perpendicular to the X direction. The vertical ribs 131 and 132 may be substantially parallel to each other. The vertical rib 131 may be closer to the battery cells 121 than the vertical rib 132 in the X direction. The vertical rib 131 may be in contact with the cell stack, and the vertical rib 132 may be spaced apart from the cell stack. The length of the vertical rib 132 in the Z direction may be smaller than the length of the vertical rib 131 in the Z direction.

Each of the horizontal ribs 133 and 134 may connect the vertical ribs 131 and 132. The horizontal ribs 133 and 134 may be spaced apart from each other in the Z direction. Each of the horizontal ribs 133 and 134 may be substantially perpendicular to the Z direction. The horizontal ribs 133 and 134 may be substantially parallel to each other. The horizontal rib 134 may be closer to the base plate (111 in FIG. 1) than the horizontal rib 133 in the Y direction. The horizontal rib 133 may be above the horizontal rib 134 in the Z direction.

Referring to FIG. 2, FIG. 3, FIG. 5, and FIG. 6, each of the side beams 130A and 130B may include pin holes 141, bolting holes 142U and 142L, and guide holes 143U and 143L.

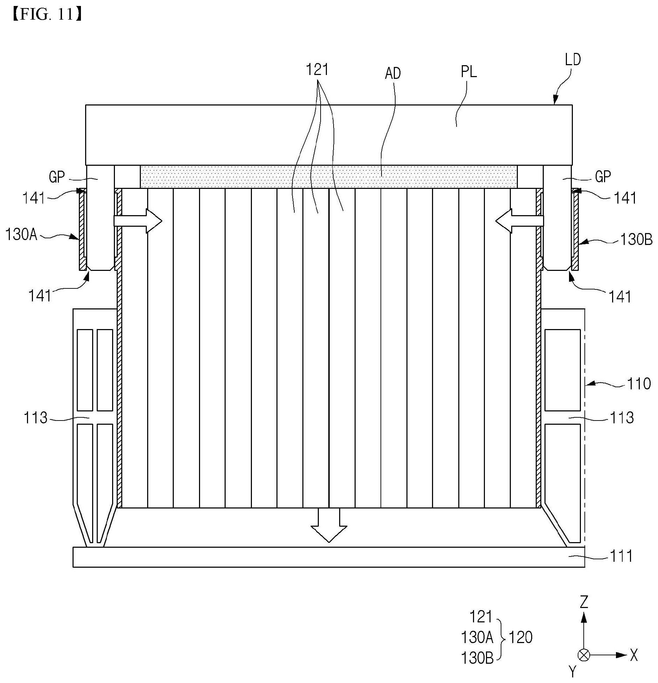

Referring to FIG. 7 and FIG. 8 together, the pin holes 141 may be configured to receive gripper pins GP when loading the battery cell assembly 120 into the pack housing 110. The gripper pins GP may be components of a loading device (LD in FIG. 11).

The pin holes 141 may be in each of the horizontal ribs 133 and 134 of the side beams 130A and 130B. Referring to FIG. 5, the pin holes 141 of the horizontal rib 133 may be spaced apart from each other in the Y direction. According to an embodiment, the pin holes 141 of the horizontal rib 133 may be between neighboring ones of the bolting holes 142U. Referring to FIG. 6, the pin holes 141 of the horizontal rib 134 may be spaced apart from each other in the Y direction. According to an embodiment, the pin holes 141 of the horizontal rib 134 may be between neighboring ones of the bolting holes 142L.

Each of the pin holes 141 of the horizontal rib 133 may be aligned with each of the pin holes of the horizontal rib 134 in the Z direction. Each of the pin holes 141 of the horizontal rib 133 may have substantially the same shape as each of the pin holes of the horizontal rib 134.

Each of the plurality of pin holes 141 may have a width 141W1 in the X direction and a width 141W2 in the Y direction. The width 141W2 in the Y direction of each of the plurality of pin holes 141 may be greater than the width 141W1 in the X direction. According to an embodiment, an XY planar shape of each of the plurality of pin holes 141 may be rectangular. According to an embodiment, an XY planar shape of each of the plurality of pin holes 141 may be rectangular with rounded vertices.

Each of the plurality of pin holes 141 may be configured to receive the gripper pins GP. Each of the gripper pins GP may penetrate the pin holes 141 of each of the horizontal ribs 133 and 134. Each of the gripper pins GP may have a width in the X direction and a width in the Y direction. The width in the Y direction of each of the gripper pins GP may be greater than the width in the X direction of each of the gripper pins GP. By making the width in the Y direction of each of the gripper pins GP greater than the width in the X direction of each of the gripper pins GP, a gripping area of the battery cell assembly 120 by the gripper pins GP can be secured more widely. As a result, in the loading process of the battery cell assembly 120 shown in FIG. 11 to FIG. 14, the gripper pins GP can apply a greater compressive force to the battery cell assembly 120.

Referring to FIG. 9 together, the bolting holes 142U and 142L may be configured to receive bolts BT when coupling each of the side beams 130A and 130B to each of the cross beams 113. Each of the bolts BT may be configured to penetrate the horizontal rib 134 and the cross beam 113 to fasten each of the side beams 130A and 130B to the cross beam 113.

The bolting holes 142U may be in the vertical rib 132 and the horizontal rib 133. Referring to FIG. 5, the bolting holes 142U may be spaced apart from each other in the Y direction. The bolting holes 142L may be in the horizontal rib 134. Referring to FIG. 6, the bolting holes 142L may be spaced apart from each other in the Y direction. Each of the bolting holes 142L may overlap with each of the bolting holes 142U in the Z direction.

The shape of each of the bolting holes 142L may be different from the shape of each of the pin holes 141. The width 141W2 in the Y direction of each of the pin holes 141 may be greater than a width 142LW2 in the Y direction of each of the bolting holes 142L. According to an embodiment, each of the bolting holes 142L may be circular.

Referring to FIG. 10 together, the guide holes 143U and 143L may be configured to receive guide pins PN coupled to the cross beam 113 when aligning each of the side beams 130A and 130B with respect to the cross beam 113. Each of the guide pins PN may be coupled to each of holes 113H of the cross beam 113.

The guide holes 143U may be in the horizontal rib 133. Referring to FIG. 5, the guide holes 143U may be spaced apart from each other in the Y direction. The guide holes 143L may be in the vertical rib 132 and the horizontal rib 134. Referring to FIG. 6, the guide holes 143L may be spaced apart from each other in the Y direction. Each of the guide holes 143U may overlap with a corresponding one of the guide holes 143L in the Z direction. According to an embodiment, each of the guide holes 143L may be spaced apart from the horizontal rib 133.

The shape of each of the guide holes 143U may be different from the shape of each of the pin holes 141. Referring to FIG. 5, the width 141W2 in the Y direction of each of the pin holes 141 may be greater than a width 143UW2 in the Y direction of each of the bolting holes 143U. According to an embodiment, the shape of each of the guide holes 143U may be circular.

Referring to FIG. 10, each of the guide pins PN may not overlap with the vertical rib 132 in the X direction by each of the guide holes 143L. Accordingly, in the loading process of the battery cell assembly 120 into the pack housing 110, during compression and restoration of the battery cell assembly 120 in the X direction, interference between the side beams 130A and 130B and the guide pins PN can be prevented. The loading process of the battery cell assembly 120 will be described later with reference to FIG. 11 to FIG. 14.

Referring to FIG. 7, FIG. 9, and FIG. 10, each of the side beams 130A and 130B may be in contact with the cross beam 113. The vertical rib 131 of the side beam 130A and the cross beam 113 may be in contact with each other at facing surfaces. The vertical rib 131 of the side beam 130B and the cross beam 113 may be in contact with each other at facing surfaces. The vertical rib 131 of each of the side beams 130A and 130B may be in contact with the cross beam 113 without clearance.

Due to the vertical rib 131 of each of the side beams 130A and 130B being coupled to the cross beam 113 in surface contact, the rigidity of the battery pack 100 can be enhanced. For example, during swelling of the battery cells 121, each of the side beams 130A and 130B may receive a compressive force between the battery cells 121 and the cross beam 113. At this time, since each of the side beams 130A and 130B is in surface contact with the cross beam 113, the compressive force applied to the side beams 130A and 130B is distributed over a wide area, and thus the pressure applied to the side beams 130A and 130B can be reduced. Accordingly, deformation of the side beams 130A and 130B can be prevented or minimized. In addition, since each of the side beams 130A and 130B is coupled to the cross beam 113 without clearance, a problem of the guide pins PN being damaged by movement of the side beams 130A and 130B during swelling of the battery cells 121 can be prevented.

Referring to FIG. 2 again, each of the integrated circuit assemblies 135 may include an insulating frame, an integrated circuit, bus bars, sensing plates, sensing bars, temperature sensors, wirings, and an insulating cover. The integrated circuit assemblies 135 may include physical and functional components for providing electrical connections between the plurality of battery cells 121, outputting a resultant voltage of the plurality of battery cells 121, and measuring voltages (or currents) of nodes inside a circuit composed of the plurality of battery cells 121.

The insulating frame may include an insulating material such as plastic. The insulating frame may cover a front of the plurality of battery cells 121. The insulating frame may support the integrated circuit, the bus bars, the sensing plates, the sensing bars, the temperature sensors, and the wirings.

The bus bars may be short-circuited to positive electrode leads of the battery cells 121 of a first bank and negative electrode leads of one or more battery cells 121 of a last bank. The bus bars may be welded to the positive electrode leads of the battery cells 121 of the first bank and the negative electrode leads of one or more battery cells 121 of the last bank. A resultant voltage of the plurality of battery cells 121 of the battery cell assembly 120 may be output through the bus bars. The bus bars may be fixed to the insulating frame.

The integrated circuit may be mounted on the insulating frame. The positive electrode leads and the negative electrode leads welded to each other may constitute nodes inside the battery cell assembly 120. The integrated circuit may be configured to measure voltages of the nodes through the sensing plates and the sensing bars.

The sensing bars may include a conductive material. The sensing bars may have a bar shape. The sensing bars may be short-circuited to the bus bars. The sensing bars may be coupled to the bus bars. Voltages of the bus bars may be measured through the sensing bars.

Each of the plurality of sensing plates may have a patch shape or a pad shape. The plurality of sensing plates may include a conductive material. The plurality of sensing plates may be short-circuited to corresponding ones of the positive electrode leads and the negative electrode leads of the plurality of battery cells 121.

Each of the plurality of sensing plates may be connected to the integrated circuit. Voltages of a plurality of nodes inside the battery cell assembly 120 may be measured through the plurality of sensing plates.

The temperature sensors may be configured to measure temperatures at a plurality of points of the battery cell assembly 120. The temperature sensors may be spatially arranged, and accordingly, a temperature distribution within the battery cell assembly 120 may be measured.

The insulating cover may include an insulating material such as plastic. The insulating cover may be fitted to the insulating frame. The insulating cover may cover the integrated circuit, the bus bars, the sensing plates, the sensing bars, and the temperature sensors, and accordingly, electrical elements of the integrated circuit assemblies 135 can be protected.

### (Third Embodiment)

FIG. 11 to FIG. 14 are cross-sectional views showing a loading process of the battery cell assembly 120 into the pack housing 110 according to exemplary embodiments.

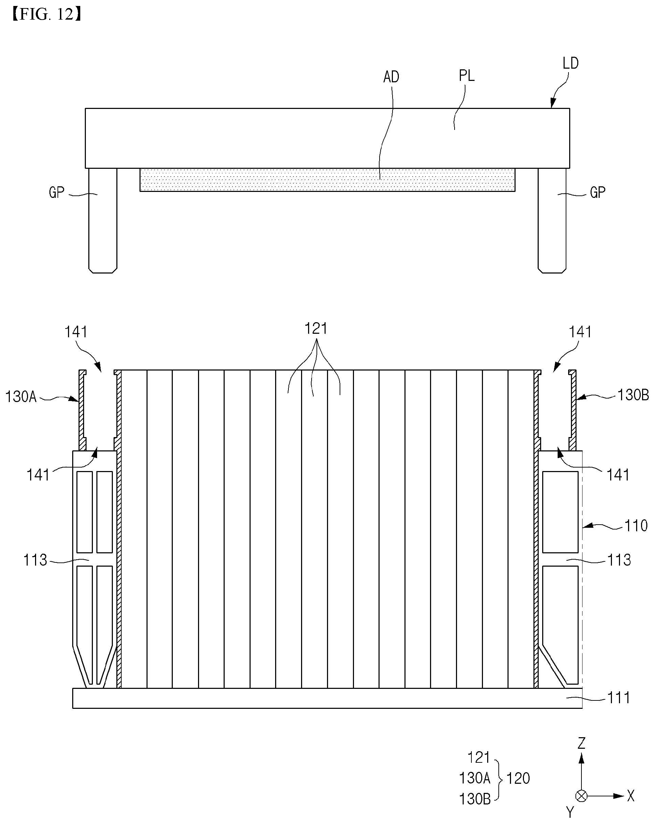

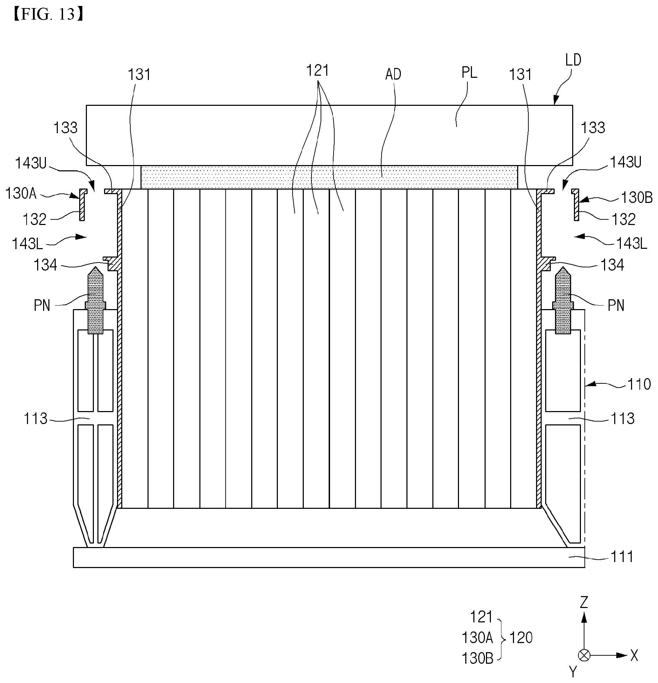

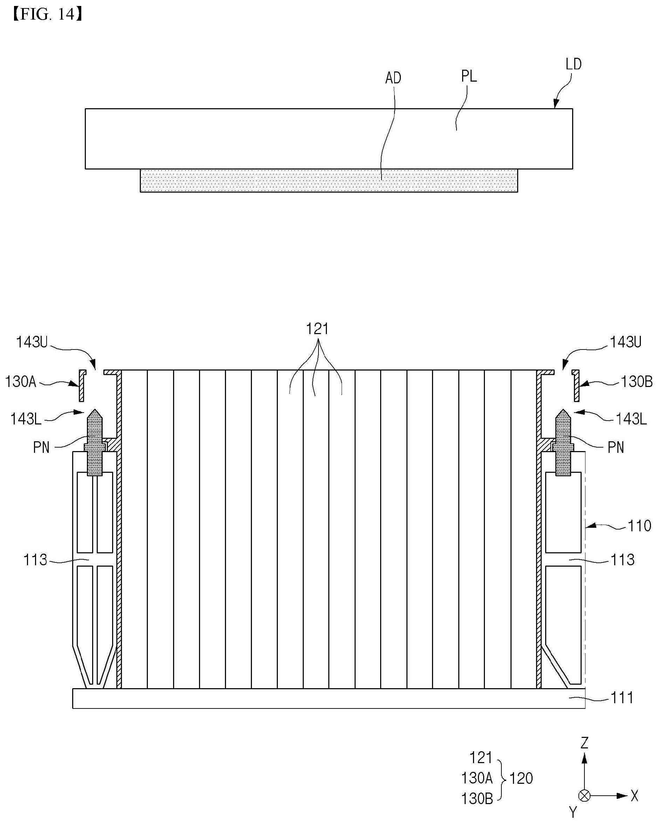

FIG. 11 and FIG. 12 show cross-sections including the pin holes 141 of the battery cell assembly 120. The battery cell assembly 120 of FIG. 11 and FIG. 12 shows a cross-section taken along X-X' of FIG. 2. FIG. 13 and FIG. 14 show cross-sections including the guide holes 143U and 143L of the battery cell assembly 120. The battery cell assembly 120 of FIG. 13 and FIG. 14 shows a cross-section taken along Y-Y' of FIG. 2.

Components having the same reference numerals as those in FIG. 1 to FIG. 10 in FIG. 11 to FIG. 14 may be applied with the descriptions described above in the first and second embodiments, and the same descriptions will be omitted.

Referring to FIG. 11, a loading device LD may be configured to transfer the battery cell assembly 120 into the pack housing 110.

The loading device LD may be configured to fix and compress the battery cell assembly 120 for transfer of the battery cell assembly 120. The loading device LD may transfer the battery cell assembly 120 into an accommodation space of the pack housing 110 by lifting, moving, and lowering the battery cell assembly 120 again.

The loading device LD may include a plate PL, an adsorption part AD, and gripper pins GP. The adsorption part AD and the gripper pins GP may be coupled to the plate PL.

The adsorption part AD may be configured to apply a vacuum pressure to the battery cell assembly 120 to fix the battery cell assembly 120 to the loading device LD. The adsorption part AD may be configured to fix the battery cell assembly 120 from an upper part of the battery cell assembly 120 in the Z direction.

Each of the gripper pins GP may be coupled to each of the side beams 130A and 130B. The gripper pins GP may be inserted into the pin holes 141 of each of the side beams 130A and 130B. The gripper pins GP may be configured to apply a compressive force to the battery cell assembly 120 in a direction approaching in the X direction. The battery cell assembly 120 may be compressed in the X direction by the compressive force by the gripper pins GP. According to an embodiment, the battery cell assembly 120 may include separators (not shown) between the battery cells 121. The separators may include an elastic material and may be compressed by the compressive force by the gripper pins GP.

Referring to FIG. 12, after seating the battery cell assembly 120 in the pack housing 110, the loading device LD may release the vacuum pressure of the adsorption part AD and the compressive force of the gripper pins GP. Thereafter, the loading device LD may be separated from the battery cell assembly 120. By this, the battery cell assembly 120 may be mounted in the pack housing 110.

As the compressive force applied to the battery cell assembly 120 by the gripper pins GP is released, a width of the battery cell assembly 120 in the X direction may be restored. As the size of the battery cell assembly 120 is restored, the side beam 130A and the cross beam 113 may be in contact with each other at facing surfaces, and the side beam 130B and the cross beam 113 may be in contact with each other at facing surfaces. Each of the side beams 130A and 130B may be coupled to each of the cross beams 113 without clearance.

FIG. 13 shows a cross-section including the guide holes 143U and 143L of the battery cell assembly 120 in the same process as FIG. 11. FIG. 14 shows a cross-section including the guide holes 143U and 143L of the battery cell assembly 120 in the same process as FIG. 12.

Referring to FIG. 13, when loading the battery cell assembly 120 into the pack housing 110, each of the guide holes 143L may be aligned with each of the guide pins PN in the Z direction. Thereafter, as each of the guide pins PN passes through each of the guide holes 143L, the battery cell assembly 120 may be seated in the pack housing 110.

Meanwhile, when seating the battery cell assembly 120 into the pack housing 110, clearance between each of the side beams 130A and 130B and the cross beam 113 must be secured to prevent damage. To this end, as shown in FIG. 11, the gripper pins GP may apply a compressive force to the battery cell assembly 120 in a direction approaching in the X direction.

In the case of the battery cell assembly 120 according to exemplary embodiments of the present disclosure, since each of the guide holes 143L extends from the horizontal rib 134 to the vertical rib 132, even when a compressive force is applied to the battery cell assembly 120 and a position of the guide holes 143L in the X direction changes, each of the guide pins PN may overlap with a corresponding one of the guide holes 143L in the Z direction. That is, even if a greater compressive force is applied to the battery cell assembly 120, interference between the guide pins PN and the side beams 130A and 130B can be prevented.

Referring to FIG. 14, after the battery cell assembly 120 is loaded into the pack housing 110, the loading device LD may be separated from the battery cell assembly 120 and the compressive force applied to the battery cell assembly 120 may be released. As a result, the size of the battery cell assembly 120 in the X direction is restored, and each of the side beams 130A and 130B may be in surface contact with each of the cross beams 113. Accordingly, stable loading of the battery cell assembly 120 into the pack housing 110 is possible.

Unlike the present disclosure, when the guide holes 143L are formed only in the horizontal rib 134 (that is, when the guide holes 143L do not extend to the vertical rib 132), a large compressive force as in the present disclosure cannot be applied to align each of the guide pins PN with each of the guide holes 143L. Therefore, even when the compressive force applied to the battery cell assembly 120 is released after loading the battery cell assembly 120 into the pack housing 110, since the degree of restoration of the battery cell assembly 120 is small, clearance may remain between each of the side beams 130A and 130B and the cross beam 113. That is, in the finally manufactured battery pack (100 in FIG. 1), there may be clearance between each of the side beams 130A and 130B and the cross beam 113.

When there is clearance between each of the side beams 130A and 130B and the cross beam 113, during swelling of the battery cells 121, there is a concern that the guide pins PN may be broken and the side beams 130A and 130B may be deformed while the clearance between each of the side beams 130A and 130B and the cross beam 113 decreases due to the expansion force of the battery cells 121.

In contrast, in the battery pack 100 according to exemplary embodiments of the present disclosure, since the side beams 130A and 130B and the cross beam 113 are in surface contact without clearance, the concern of damage to the guide pins PN and the side beams 130A and 130B can be greatly reduced. Accordingly, the rigidity of the battery pack 100 can be enhanced.

As described above, the present disclosure has been described in more detail through drawings and embodiments. However, it should be understood that the configurations described in the drawings or the embodiments described in the present specification are merely one embodiment of the present disclosure and do not represent all of the technical ideas of the present disclosure, so various equivalents and modifications may exist that can substitute for these at the time of filing the present application.

## Claims

1. A battery cell assembly comprising:
a plurality of battery cells arranged in a first direction; and
first and second side beams spaced apart from each other in the first direction with the plurality of battery cells therebetween,
wherein each of the first and second side beams comprises:
first and second vertical ribs perpendicular to the first direction; and
first and second horizontal ribs connecting the first and second vertical ribs,
wherein the first vertical rib is closer to the battery cells than the second vertical rib,
wherein the first horizontal rib is above the second horizontal rib,
wherein each of the first and second side beams comprises pin holes in each of the first and second horizontal ribs, and
wherein each of the pin holes has:
a width in the first direction, and
a width in a second direction perpendicular to the first direction, and
wherein the width in the second direction is greater than the width in the first direction.

2. The battery cell assembly of claim 1, wherein a planar shape of each of the pin holes is rectangular or rectangular with rounded vertices.

3. The battery cell assembly of claim 1, wherein the pin holes of the first horizontal rib are aligned in a vertical direction with corresponding ones of the pin holes of the second horizontal rib.

4. The battery cell assembly of claim 1, wherein each of the first and second side beams comprises:
first bolting holes in the first horizontal rib and the second vertical rib; and
second bolting holes in the second horizontal rib and overlapping with corresponding ones of the first bolting holes in the vertical direction.

5. The battery cell assembly of claim 4, wherein the shape of each of the pin holes is different from the shape of each of the second bolting holes.

6. The battery cell assembly of claim 4, wherein the width in the second direction of each of the pin holes is greater than a width in the second direction of each of the second bolting holes.

7. The battery cell assembly of claim 4, wherein the shape of each of the second bolting holes is circular.

8. The battery cell assembly of claim 4, wherein each of the pin holes of the first horizontal rib is between neighboring ones of the first bolting holes, and
wherein each of the pin holes of the second horizontal rib is between neighboring ones of the second bolting holes.

9. The battery cell assembly of claim 1, wherein each of the first and second side beams further comprises:
first guide holes in the first horizontal rib; and
second guide holes in the second horizontal rib and the second vertical rib and overlapping with corresponding ones of the first guide holes in the vertical direction.

10. The battery cell assembly of claim 9, wherein the shape of each of the pin holes is different from the shape of each of the first guide holes.

11. The battery cell assembly of claim 9, wherein the width in the second direction of each of the pin holes is greater than a width in the second direction of each of the first guide holes.

12. The battery cell assembly of claim 9, wherein each of the second guide holes is spaced apart from the first horizontal rib.

13. The battery cell assembly of claim 9, wherein each of the first guide holes is circular.

14. A battery cell assembly comprising:
a plurality of battery cells arranged in a first direction; and
first and second side beams spaced apart from each other in the first direction with the plurality of battery cells therebetween,
wherein each of the first and second side beams comprises:
first and second vertical ribs perpendicular to the first direction; and
first and second horizontal ribs connecting the first and second vertical ribs,
wherein the first vertical rib is closer to the battery cells than the second vertical rib,
wherein the first horizontal rib is above the second horizontal rib, and
wherein each of the first and second side beams comprises:
first guide holes in the first horizontal rib; and
second guide holes in the second horizontal rib and the second vertical rib and overlapping with corresponding ones of the first guide holes in the vertical direction.

15. A battery pack comprising:
a base plate; and
the battery cell assembly according to claim 14 on the base plate;
first and second cross beams spaced apart from each other in the first direction with the battery cell assembly therebetween and each extending in a second direction perpendicular to the first direction; and
guide pins coupled to each of the first and second cross beams and inserted into each of the second guide holes of the first and second side beams, and
wherein each of the guide pins does not overlap with the second vertical rib in the first direction by each of the second guide holes.
